# EUROPÄISCHE PATENTANMELDUNG

(11) **EP 2 085 207 A2**
(43) Veröffentlichungstag der Anmeldung: **05.08.2009**
(21) Anmeldenummer: 09001378.0
(22) Anmeldetag: 02.02.2009
(51) Int. Cl.: B29C 47/88, B29C 47/90

(54) **Vorrichtung zur Herstellung von Blasfolie**

(30) Priorität: 31.01.2008 DE 102008006818
(71) Anmelder: INOEX GmbH, 32547 Bad Oeynhausen (DE)
(72) Erfinder: Wirtz, Robert, 48161 Münster (DE); Klose, Reinhard, 31737 Rinteln (DE); Schmuhl, Jörg, Dr., 15711 Königs Wusterhausen (DE)
(74) Vertreter: Seewald, Jürgen

(57) **Zusammenfassung**

Die vorliegende Erfindung betrifft eine Vorrichtung zur Herstellung von Blasfolie mit einem einen extrudierten Kunststoffschlauch (2) umhüllenden Kühlring (4) zur Aufbringung eines Flüssigkeitsfilms auf die Außenseite des Kunststoffschlauches (2). Aufgabe der Erfindung ist es, eine derartigee Vorrichtung mit einem Kühlring (4) zur Verfügung zu stellen, der eine optimale Kühlwirkung bei unterschiedlichen Folienbreiten gewährleistet.

## Beschreibung

Die vorliegende Erfindung betrifft eine Vorrichtung zur Herstellung von Blasfolie gemäß dem Oberbegriff des Anspruchs 1.

Vorrichtungen dieser Art sind beispielsweise aus der DE 100 48 178 B4, der DE 199 16 428 B4, der DE 197 28 522 C2 und der DE 10 2005 010 471 A1 bekannt.

Durch die Flüssigkeitskühlung der Außenseite des extrudierten Schlauches wird eine sehr intensive und schnelle Abkühlung der Folie erreicht, die zum Beispiel bei teilkristallinen Rohrstoffen zu einer kleinkristallinen Gefügestruktur führt. Dies ergibt Folien mit sehr hohen Transparenz und großem Oberflächenglanz, hoher Durchstoßfestigkeit und guter Tiefziehfähigkeit. Um eine gute Kühlwirkung und einen stabilen Betrieb zu gewährleisten, ist bei den bekannten Vorrichtungen der Innendurchmesser des Kühlrings mit einem optimalen Abstand an den Durchmesser des Schlauchs angepasst, Nachteilig dabei ist, dass bei einem Wechsel von einer Folienbreite zur anderen, d.h., bei einer Änderung des Außendurchmessers des Schlauchs, der Kühlring gewechselt werden muss, um weiterhin eine optimale Außenkühlung des Schlauchs bei stabilem Betrieb zu gewährleisten.

Aufgabe der vorliegenden Erfindung ist es, eine gattungsgemäße Vorrichtung mit einem Kühlring zur Verfügung zu stellen, der eine optimale Kühlwirkung bei unterschiedlichen Folienbreiten gewährleistet.

Diese Aufgabe wird erfindungsgemäß mit einer Vorrichtung gelöst, die die Merkmale des Anspruchs 1 aufweist.

Demnach ist eine erfindungsgemäße Vorrichtung dadurch gekennzeichnet, dass der Innendurchmesser des Kühlrings verstellbar ist. Diese Lösung hat den Vorteil, dass der Kühlring bei einer Produktionsumstellung auf eine andere Folienbreite, d. h. auf einen anderen Durchmesser des Kunststoffschlauchs, nicht mehr ausgewechselt werden muss. Dadurch wird Umrüstzeit eingespart. Des Weiteren müssen auch nicht mehrere Kühlringe mit unterschiedlichen Innendurchmessern vorgehalten werden, wodurch sich die Investitionskosten und Lagerhaltungskosten verringern. Des Weiteren ist mit dieser Lösung auch eine Produktionsumstellung bei laufendem Betrieb möglich, wenn die dem Kühlring in Extrusionsrichtung nachfolgenden Einrichtungen, wie z. B. eine Kalibriervorrichtung, ebenfalls entsprechend radial verstellbar sind.

In vorteilhafter Ausgestaltung der Erfindung besteht der Kühlring aus auf den Umfang verteilten, radial verstellbaren Schieberelementen, die sich zur Erzielung eines bei allen einstellbaren Innendurchmessern geschlossenen Ringes in Teilbereichen überlappen.

In Anpassung an verschiedene Durchmesser des Kunststoffschlauches genügt es, wenn der Kühlring als ganzes im Innendurchmesser verstellbar ist. In diesem Falle bildet der Kühlring dann einen Hohlzylinder aus, dessen Innendurchmesser an den Durchmesser des extrudierten Kunststoffschlauches anpassbar ist.

In weiterer Ausgestaltung der Erfindung ist es aber besonders vorteilhaft, wenn die Schieberelemente in Extrusionsrichtung gesehen in Gruppen zusammengefasst sind, die dann natürlich ebenfalls wieder synchron, insbesondere aber auch individuell radial verstellbar sind. Durch die individuelle radiale Verstellbarkeit, d. h., jede Gruppe von Schieberelementen ist unabhängig von den anderen Gruppen von Schieberelementen verstellbar, lässt sich die Innenkontur des Kühlrings nicht nur an verschiedene Durchmesser anpassen, sondern auch an die Blasenform, die beim Aufblasen eines Kunststoffschlauchs im Übergangsbereich z. B. konisch verläuft. So ist auch in diesen Bereichen eine optimale Kühlung des Kunststoffschlauches erreichbar.

Andere Weiterbildungen der Erfindung ergeben sich aus den übrigen Unteransprüchen.

Die Erfindung wird nachstehend anhand von Ausführungsbeispielen näher erläutert. In der dazu gehörigen Zeichnung zeigt:
- Fig. 1: in schematischer Darstellung einen Schnitt durch einen Kühlring einer Blasfolienanlage mit unterschiedlichen Darstellungen auf der linken und rechten Bildhälfte,
- Fig. 2: eine Draufsicht auf einen Kühlring mit Schieberelementen,
- Fig. 3: eine Einzeldarstellung eines Schieberelements im Halbschnitt in einer ersten Ausführungsform,
- Fig. 4: eine vergrößerte Seitenansicht des unteren Bereichs des Schieberelements gemäß Fig. 3 im Schnitt,
- Fig. 5: eine Druntersicht der Darstellung gemäß Fig. 4 im kleineren Maßstab,
- Fig. 6: einen Schnitt A-A durch ein Schieberelement nach einer weiteren Ausführungsform gemäß Fig. 7,
- Fig. 7: einen Schnitt B-B gemäß Fig. 4, und
- Fig.8: eine Darstellung gemäß Fig. 1 nach einer weiteren Ausführungsform der Erfindung.

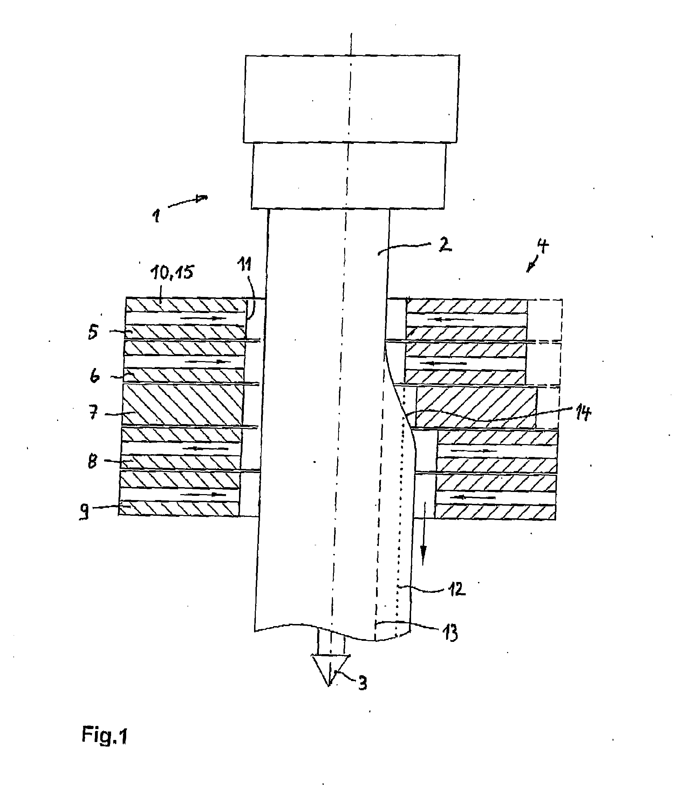

Figur 1 zeigt einen Teil einer Blasfolienanlage mit einem Folienblaskopf 1, aus dem ein Kunststoffschlauch 2 austritt. In Extrusionsrichtung, die durch einen Pfeil 3 symbolisiert ist, schließt sich an den Folienblaskopf 1 ein Kühlring 4 an. Mittels dieses Kühlrings 4 wird die Außenseite des Kunststoffschlauchs 2 durch Aufbringung von Kühlwasser gekühlt. Um das Handling mit dem Kühlwasser zu erleichtern, wird der Kunststoffschlauch 2 senkrecht nach unten extrudiert.

Der Kühlring 4 besteht aus fünf in Extrusionsrichtung 3 hintereinander angeordneten Gruppen 5 bis 9 aus Schieberelementen 10, 15. Die Schieberelemente 10, 15 jeder Gruppe 5 bis 9 bilden eine geschlossene Innenfläche 11, die den Kunststoffschlauch 2 hohlzylinderförmig umgibt. Die Schieberelemente 10, 15 jeder Gruppe 5 bis 9 sind radial in beiden Richtungen individuell verstellbar, d. h., jede Gruppe 5 bis 9 kann auf einen anderen Innendurchmesser eingestellt werden.

In dem Ausführungsbeispiel gemäß der linken Bildhälfte von Figur 1 wird ein Kunststoffschlauch 2 extrudiert, dessen Durchmesser sich in Extrusionsrichtung 3 nicht verändert. Die Gruppen 5 bis 9 der Schieberelemente 10, 15 sind daher auf den gleichen Innendurchmesser eingestellt, d. h., sie bilden einen Hohlzylinder gleichen Durchmessers. Über die Schieberelemente 10, 15 der Gruppen 5, 6 und 9 wird der Außenseite des Kunststoffschlauches 2 Kühlwasser zugeführt, so dass sich ein gleichmäßiger Wasserfilm auf der Außenseite des Kunststoffschlauchs 2 ausbildet, so dass dieser intensiv und schnell gekühlt wird. Über die Schieberelemente 10, 15 kann auch Wasser abgesaugt werden, was in der Darstellung gemäß Fig. 1 anhand der Gruppe 8 dargestellt ist. In den einzelnen Gruppen 5 bis 9 kann zur Optimierung der Kühlung des Kunststoffschlauches 2 auch Kühlwasser unterschiedlicher Temperatur zugeführt werden. Es ist auch möglich eine oder einzelne Gruppen ohne Wasserzu- oder -ablauf auszubilden, was in der Darstellung gemäß Fig. 1 anhand der Gruppe 7 symbolisch dargestellt ist.

Wenn auf der Blasfolienanlage ein Kunststoffschlauch 2 mit anderer Blasenform gefahren werden soll, werden die Schieberelemente 10, 15 der Gruppen 5 bis 9 synchron zugefahren. Das ist in der rechten Bildhälfte von Figur 1 dargestellt, in der der dann vorliegende Innendurchmesser des durch die Schieberelemente 10, 15 der Gruppen 7, 8 und 9 gebildeten Hohlzylinders durch eine Punktlinie 12 angedeutet ist. In dieser Stellung haben die Schieberelemente 10, 15 der Gruppen 5 bis 9 wieder gleichen Abstand zum Außendurchmesser des Kunststoffschlauches 2, dessen Oberfläche im Bereich der Gruppen 6 bis 9 in Fortsetzung der Vollinie im Bereich der Gruppe 5 durch eine Strichlinie 13 symbolisch dargestellt ist.

So lange der extrudierte Kunststoffschlauch 2 im Bereich des Kühlrings 4 einen gleich bleibenden Außendurchmesser hat, ist es nicht erforderlich, den Kühlring 4 aus Gruppen individuell verstellbarer Schieberelemente 10, 15 zusammen zu setzen. Der Kühlring 4 könnte dann als Block ausgebildet sein, bei dem nur eine synchrone Verstellung aller Schieberelemente 10, 15 möglich ist.

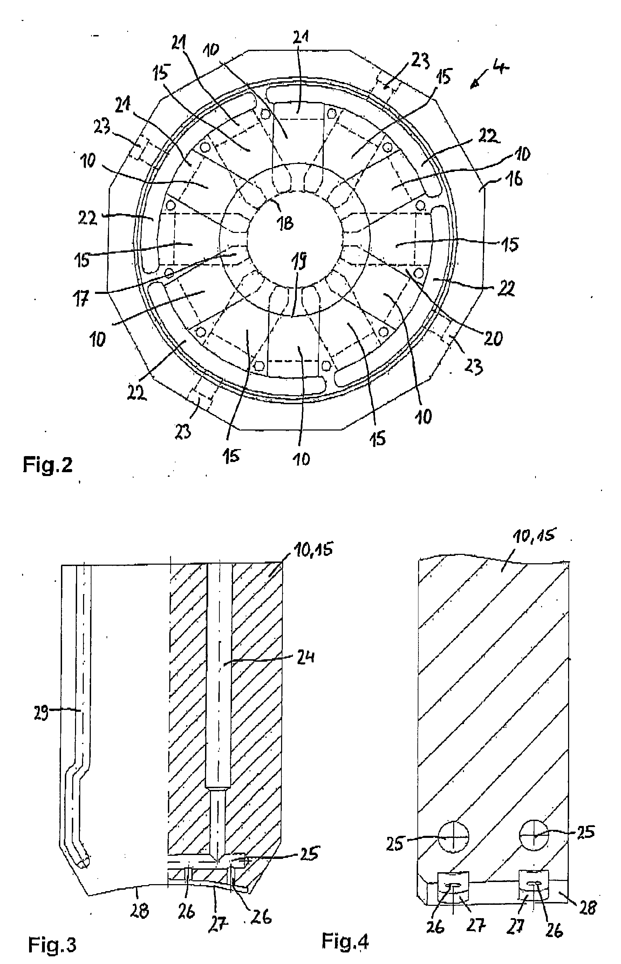

Bei der Blasfolienextrusion wird der extrudierte Folienschlauch 2 jedoch sehr häufig aufgeblasen, um seinen Durchmesser zu ändern. Dadurch ergeben sich in Extrusionsrichtung 3 gesehen mindestens zwei unterschiedliche Durchmesser des Kunststoffschlauches 2 mit einem konischen Übergangsbereich 14, wie in der rechten Bildhälfte von Figur 1 dargestellt ist. Aufgrund einer individuellen Einstellung der Schieberelemente 10, 15 jeder der Gruppen 5 bis 9 können deren Innenflächen 11 auf einen zur Kühlung des Kunststoffschlauchs 2 optimalen Abstand zu dessen Außenseite eingestellt werden, wie aus der Darstellung auf der rechten Bildhälfte von Fig. 2 hervorgeht.

Wie oben bereits erwähnt, weist der Kühlring 4 Schieberelemente 10 und 15 auf, die radial in beide Richtungen verstellbar in einem Gehäuse 16 gelagert sind. Bezogen auf die Draufsicht der Darstellung gemäß Fig. 2 bilden sechs Schieberelemente 10 eine erste Radialebene und sechs weitere Schieberelemente 15 eine weitere Radialebene, die, bezogen auf die Darstellung gemäß Fig. 2, hinter der ersten Radialebene angeordnet ist. Die Schieberelemente 10, 15 überlappen sich von Radialebene zu Radialebene, wie aus Fig. 2 hervorgeht. Hier sind die Überlappungsbereiche mit dem Bezugszeichen 17 versehen. Die Schieberelemente 10, 15 sind in den Grenzen einer inneren Kreislinie 18 und einer äußeren Kreislinie 19 radial verstellbar, d. h., der Kühlring 4 ist im Rahmen dieser Durchmesserdifferenz auf unterschiedliche Durchmesser des extrudierten Kunststoffschlauchs 2 einstellbar.

In dem Gehäuse 16 sind seitliche Führungen 20 angeordnet, die Führungsschächte 21 für die Schieberelemente 10, 15 bilden. Diese Führungsschächte 21 münden direkt in Wasserkammem 22, die über Zuleitungen 23 mit Druckwasser versorgt werden. Dabei ist jeweils einer Gruppe von drei Schieberelementen 10 bzw. 15 eine separate Wasserkammer 22 zugeordnet.

Der Kühlring 4 kann eine Vielzahl von hintereinander angeordneten Radialebenen von Schieberelementen 10 bzw. 15 aufweisen, wobei die Schieberelemente 10, 15 aller Radialebenen synchron durch einen, z. B. mechanischen oder hydraulischen Antrieb angetrieben werden. Derartige Antriebe sind einem Fachmann bekannt, so dass hierzu keine weiteren Ausführungen erforderlich sind.

Wie oben schon ausgeführt, kann der Kühlring 4 aus zu Gruppen 5 bis 9 zusammengefassten Schieberelementen 10, 15 bestehen, wobei auch eine größere oder geringere Anzahl von Gruppen zum Einsatz kommen kann. Der Aufbau jeder Gruppe 5 bis 9 unterscheidet sich von dem oben als Block beschriebenen Kühlring 4 lediglich dadurch, dass jede Gruppe 5 bis 9 aus weniger Radialebenen von Schieberelementen 10, 15 besteht, wobei die Anzahl der Radialebenen von Gruppe 5 bis 9 zu Gruppe 5 bis 9 auch schwanken kann.

In dem Ausführungsbeispiel gemäß den Fig. 3 bis 5 besitzt jedes Schieberelement 10, 15 mindestens einen radialen Kanal 24, dessen äußeres Ende mit einer der Wasserkammern 22 kommuniziert und dessen inneres Ende in einem tangentialen Verteilungskanal 25 mündet, von dem vier radiale Zweigkanäle 26 abgehen, die ihrerseits in eine zum Kunststoffschlauch 2 hin offene Nut 27 in der Stirnseite 28 jedes Schieberelements 10, 15 münden. Dieses Kanalsystem 24, 25, 26, 27 ist in jedem Schieberelement 10, 15 doppelt vorhanden. In ihren Überlappungsbereichen 17 sind die Schieberelemente 10, 15 auf ihren einander zugewandten Flächen mit radialen Nuten 29 versehen, deren äußeres Ende ebenfalls mit einer der Wasserkammem 22 kommuniziert.

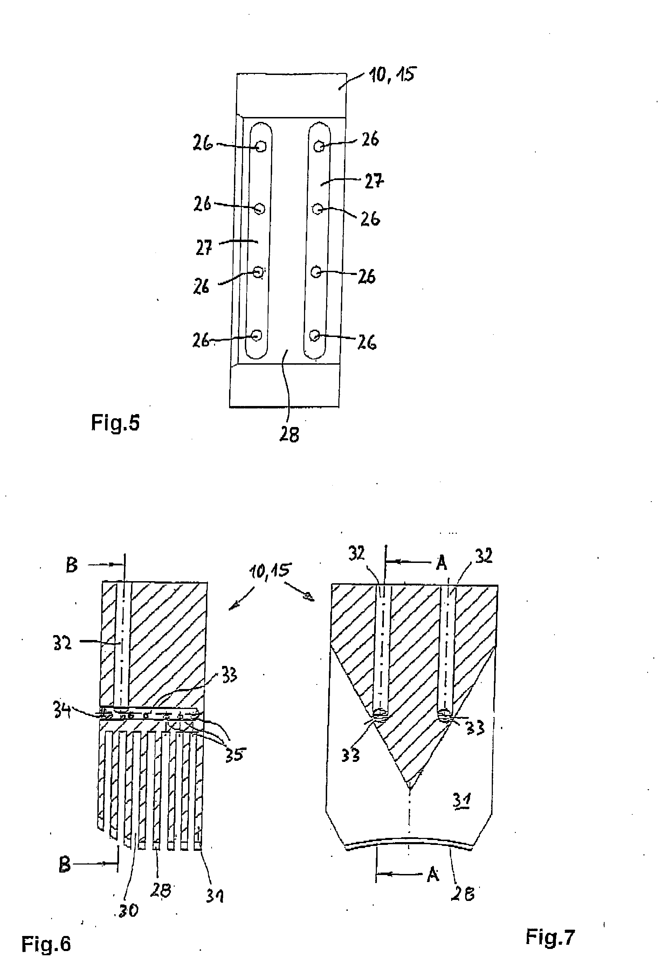

In den Figuren 6 und 7 ist ein Schieberelement 10, 15 nach einer weiteren Ausführungsform der Erfindung dargestellt. Diese Schieberelemente 10, 15 sind ebenfalls wieder in einem Gehäuse 16 gemäß Fig. 2 gelagert. Insofern gilt das oben Gesagte. Demgemäß haben die Schieberelemente 10, 15 wieder Überlappungsbereiche 17. In diesen Überlappungsbereichen 17 sind die Schieberelemente 10, 15 mit Schlitzen 30 versehen, die jeweils von Stegen 31 begrenzt sind, wie in Figur 6 dargestellt ist. Die Schlitze 30 und Stege 31 benachbarter Schieberelemente 10, 15 greifen in den Überlappungsbereichen 17 verzahnend ineinander, wobei die Schieberelemente 10, 15 alternierend um einen Schlitz 30 bzw. Steg 31 in Extrusionsrichtung 3 bzw. entgegen der Extrusionsrichtung 3 zueinander versetzt sind.

Jedes Schieberelement 10, 15 besitzt zwei radiale Kanäle 32, deren äußeren Enden mit einer der Wasserkammern 22 kommunizieren und deren inneren Enden jeweils in einem axialen Stichkanal 33 münden, der in Extrusionsrichtung 3 als Sackloch endet und dessen entgegengesetztes, nach außen mündendes Ende durch einen Stopfen 34 verschlossen ist. Von den Stichkanälen 33 führen Wasserauslässe 35 in die Schlitze 30.

Im Betrieb wird über die Druckwasserauslässe 27, 35 in den Stirnseiten 28 der Schieberelemente 10, 15 Kühlwasser auf die Außenseite des extrudierten Kunststoffschlauchs 2 gesprüht, so dass sich eine gleichmäßige Folienbenetzung ergibt, d.h., eine optimale Außenkühlung vorliegt.

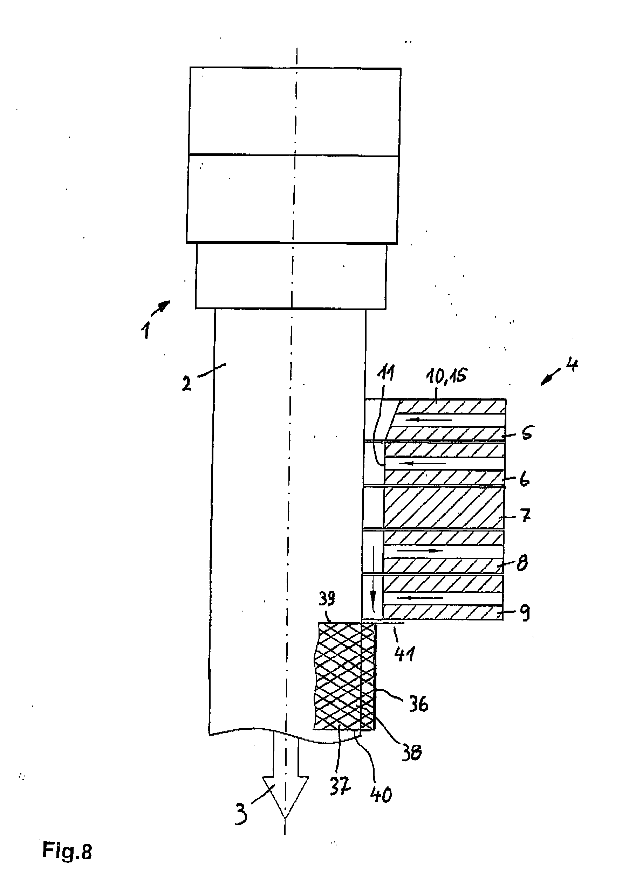

Die in Figur 8 dargestellte Ausführungsform der vorliegenden Erfindung unterscheidet sich von den vorhergehenden Ausführungsbeispielen dadurch, dass sich an den Kühlring 4 ein Führungskäfig 36 anschließt. Dieser besteht aus zwei Bänderlagen 37, 38, die sich nach Art eines Scherengitters kreuzen und an den Kreuzungspunkten gelenkig miteinander verbunden sind. Der Führungskäfig 36 besitzt, bezogen auf die Extrusionsrichtung 3, ein Einlaufende 39 und ein Auslaufende 40. Der Durchmesser des durch die Bänderlagen 37, 38 gebildeten hohlzylindrischen Führungskäfigs 36 ist veränderbar, indem das Auslaufende 40 z. B. über nicht dargestellte Spindeleinheiten axial verstellt wird. Durch Verstellung des Auslaufendes 40 zum Einlaufende 39 hin wird der Durchmesser vergrößert, durch Verlagerung des Auslaufendes 40 vom Einlaufende 39 weg verringert sich der Durchmesser des Hohlzylinders. Am Einlaufende 39 sind die beiden Bänderlagen 37, 38 gelenkig mit den Schieberelementen 10, 15 der Gruppe 9 verbunden, was in Figur 8 symbolisch mit einer Linie 41 angedeutet ist.

Hinsichtlich des Aufbaus des Führungskäfigs 36, seiner radialen und axialen Beweglichkeit sowie seiner Befestigung an den Schieberelementen 10, 15 der Gruppe 9 des Kühlrings 4 wird zum Zwecke der Offenbarung auf die DE 10 2005 002 820 B3 hingewiesen, auf deren Inhalt ausdrücklich Bezug genommen wird.

Im Führungskäfig 36 wird die Form des Kunststoffschlauches 2, der im Bereich des Kühlrings 4 gekühlt wird, stabilisiert.

Das in Figur 8 gezeigte Ausführungsbeispiel bezieht sich auf die Darstellung in der linken Bildhälfte von Figur 1. Es ist jedoch ebenso möglich, den Führungskäfig 36 bei der Ausführungsform gemäß der rechten Bildhälfte in Figur 1 vorzusehen.

## Patentansprüche

1. Vorrichtung zur Herstellung von Blasfolie mit einem einen extrudierten Kunststoffschlauch umhüllenden Kühlring zur Aufbringung eines Flüssigkeitsfilms auf die Außenseite des Kunststoffschlauches, **dadurch gekennzeichnet, dass** der Innendurchmesser des Kühlrings (4) verstellbar ist.

2. Vorrichtung nach Anspruch 1, **dadurch gekennzeichnet, dass** der Kühlring (4) aus in mindestens zwei Radialebenen angeordneten, auf den Umfang verteilten, radial verstellbaren Schieberelementen (10, 15) besteht, die sich von Radialebene zu Radialebene überlappen und in den Überlappungsbereichen (17) aneinander liegen.

3. Vorrichtung nach Anspruch 1, **dadurch gekennzeichnet, dass** der Kühlring (4) aus mehreren auf den Umfang verteilten radial verstellbaren und sich überlappenden Schieberelementen (10, 15) besteht, die in ihren Überlappungsbereichen (17) Schlitze (31) aufweisen und verzahnend ineinander greifen.

4. Vorrichtung nach Anspruch 2 oder 3, **dadurch gekennzeichnet, dass** die Schieberelemente (10, 15) in Extrusionsrichtung (3) gesehen in Gruppen (5 bis 9) zusammengefasst sind, die synchron oder individuell radial verstellbar sind.

5. Vorrichtung nach einem der Ansprüche 2 bis 4, **dadurch gekennzeichnet, dass** in den Stirnseiten (28) der Schieberelemente (10, 15) mindestens ein Druckwasserauslass (27, 35) vorgesehen ist.

6. Vorrichtung nach einem der vorstehenden Ansprüche, **dadurch gekennzeichnet, dass** sich an den Kühlring (4) in Extrusionsrichtung (3) ein Führungskäfig (36) anschließt, dessen Durchmesser synchron mit dem Kühlring (4) verstellbar ist.
